# EUROPÄISCHE PATENTANMELDUNG

(11) **EP 2 128 963 A1**
(43) Veröffentlichungstag der Anmeldung: **02.12.2009**
(21) Anmeldenummer: 08009852.8
(22) Anmeldetag: 29.05.2008
(51) Int. Cl.: H02K 5/02, H02K 1/27, H02K 1/28

(54) **Rotor für eine elektrische Maschine**

(71) Anmelder: SIEMENS AKTIENGESELLSCHAFT, 80333 München (DE)
(72) Erfinder: Potoradi, Detlef, Dr., 97616 Bad Neustadt/Saale Mühlbach (DE); Vollmer, Rolf, 36129 Gersfeld (DE)

(57) **Zusammenfassung**

Soll ein Rotor (10) permanent angeregt sein, müssen an einem Läuferblech (12) Permanentmagnete (18) angeordnet werden. Damit diese sich bei hohen Drehzahlen nicht von dem Läuferblechpaket (12) lösen, ist eine Bandage (20) bereitgestellt. Damit diese Bandage (20) nicht zu dick ausgeführt werden muss, wenn hohe Drehzahlen des Rotors (10) erzielt werden sollen, besteht die Bandage (20) aus einem (Kohlenstoff-) Nanoröhren umfassenden Material.

## Beschreibung

Die Erfindung betrifft einen Rotor für eine elektrische Maschine nach dem Oberbegriff von Patentanspruch 1 sowie eine elektrische Maschine mit einem solchen Rotor.

Anwendungsgebiet sind Elektromotoren mit permanenterregten Rotoren. Der Rotor umfasst ein Blechpaket, auf dessen (Außen)-Oberfläche Permanentmagnete angeordnet sind. Permanentmagnete werden typischerweise auf das Läuferblechpaket geklebt und zusätzlich mit einer Bandage befestigt. Vor allem bei hohen Drehzahlen und hohen Drehmomenten wirken auf die Permanentmagnete sehr hohe Fliehkräfte, also Kräfte in radialer Richtung (wie auch hohe Drehmoment bildende Kräfte, also tangential wirkende Kräfte). Die Bandage und der Klebstoff sind hierbei starken Kräften ausgesetzt, denen sie nicht immer standhalten. Die Drehzahlen des Rotors in der elektrischen Maschine sind wegen dieses Schwachpunktes nach oben begrenzt. Möchte man eine besonders hohe Drehzahl erreichen, muss eine besonders dicke Bandage bereitgestellt werden, wodurch der magnetisch wirksame Luftspalt (zwischen Stator und Rotor) erhöht wird und daher das erzielbare Drehmoment pro Volumen der elektrischen Maschine (Drehschub) verringert wird.

Es ist Aufgabe der Erfindung, den durch die Bandage, also das Haltemittel, durch das die Permanentmagnete an dem Blechpaket gehalten sind, auftretenden Schwachpunkt zu beseitigen und so höhere Drehzahlen bei wenig Platz beanspruchendem Haltemittel zu ermöglichen.

Die Aufgabe wird dadurch gelöst, dass das Haltemittel ein Nanoröhren umfassendes Material umfasst (und bevorzugt vollständig aus einem solchen gebildet ist).

Durch Nanoröhren wird eine kleinteilige Struktur, nämlich eine Nanostruktur, bereitgestellt, die die Stabilität der Haltemittel erhöht. Daher müssen die Haltemittel (die das Blechpaket mit den Permanentmagneten umgeben) nicht so dick ausgebildet sein wie ohne Nanoröhren. Behielte man im Vergleich zu Haltemitteln des Standes der Technik die Dicke der Haltemittel bei, könnten höhere Drehzahlen erzielt werden.

Bevorzugt umfasst das Haltemittel ein Kohlenstoffnanoröhren umfassendes Material. Dieses hat über die mechanische Stabilität hinaus auch die Eigenschaft, dass das Material eine im Vergleich zu den im Stand der Technik verwendeten Materialien erhöhte Leitfähigkeit hat. Diese elektrische Leitfähigkeit geht auch mit einer erhöhten thermischen Leitfähigkeit einher. Während sich im Stand der Technik die Permanentmagnete erwärmen und die Wärme schlecht abgeführt wird, ist durch die Verwendung der Kohlenstoffnanoröhren in dem Haltemittel gewährleistet, dass Wärme von Permanentmagneten besser abgeführt wird und sich diese nicht übermäßig erwärmen.

In an sich bekannter Weise kann das Haltemittel aus Fasern bestehen, welche in eine Matrix eingebettet sind. Es gibt zwei Möglichkeiten, wie die Nanoröhren in dem Haltemittel bereitgestellt werden können und zur erhöhten Stabilität beitragen können: Zum Einen können die Nanoröhren mit den Fasern gekoppelt werden (z.B. bei Herstellung der Haltemittel mit den Fasern gemischt werden), wobei sie sich punktweise mit diesen verbinden. Zusätzlich oder alternativ können die Fasern auch in dem Matrixmaterial bereitgestellt werden.

Als Fasermaterial eignen sich Glasfasern, Aramidfasern und/oder Kohlefasern, während die Matrix bevorzugt aus Epoxidharz, einem Harz aus ungesättigtem Polyester, einem Phenolharz oder Mischungen dieser Materialien gebildet ist.

Gut montierbar ist das Haltemittel, wenn es in Form einer (festen und daher formstabilen) Hülse bereitgestellt ist. Besonders wenig Platz nimmt das Haltemittel ein, wenn es in Form einer Folie bereitgestellt ist, wobei es insbesondere als Schrumpffolie ausgebildet sein kann, die bei der Montage erwärmt wird und sich hierbei an die Permanentmagneten anschmiegt.

Der erfindungsgemäße Rotor soll in einer elektrischen Maschine mit einem Stator bereitgestellt werden, in dem der Rotor bewegbar angeordnet und gehalten ist.

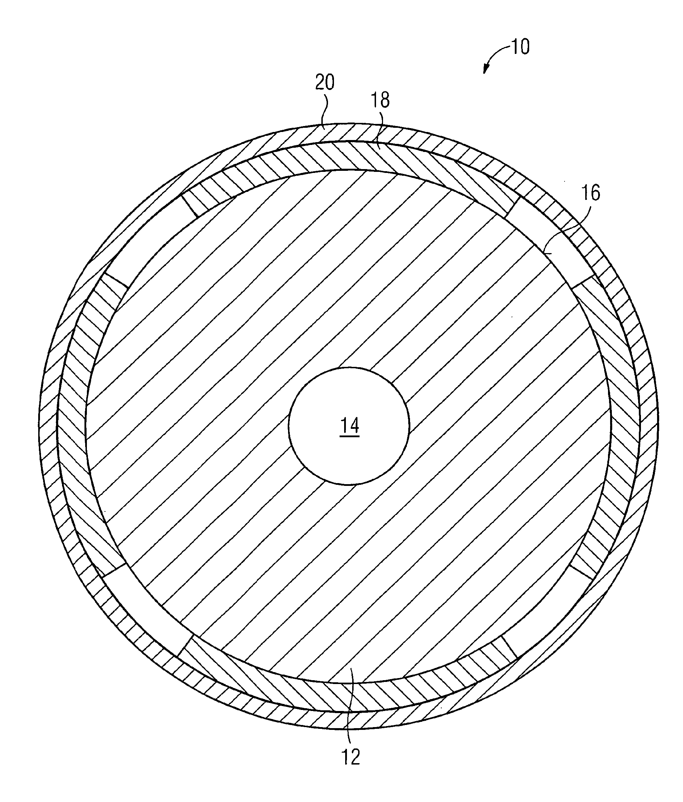

Nachfolgend wird eine bevorzugte Ausführungsform der Erfindung unter Bezug auf die Zeichnung beschrieben, wobei
- FIG 1: einen Querschnitt durch einen Rotor zeigt, der in einem Elektromotor permanent erregt ist, und der als erfindungsgemäßer Rotor ausgestaltet sein kann.

Ein im Ganzen mit 10 bezeichneter Rotor umfasst ein ringförmiges Blechpaket (sogenanntes Läuferblechpaket) 12, das auf einer Welle 14 sitzt. Das Blechpaket 12 hat vorliegend eine zylinderförmige Außenoberfläche 16, auf der abschnittsweise Permanentmagnete 18 angebracht sind. Die Permanentmagnete 18 sind von einer als Haltemittel wirkenden Bandage 20 gehalten.

Erfindungsgemäß ist die Bandage 20 aus einem Material gebildet, das Kohlenstoffnanoröhren umfasst. Kohlenstoffnanoröhren, auch CNT (Carbon Nano Tubes) genannt, sind mikroskopisch kleine röhrenförmige Gebilde (molekulare Nanoröhren) aus Kohlenstoff, vergleiche Wikipedia, die freie Enzyklopädie in der Fassung vom 19. Februar 2008.

Diese Kohlenstoffnanoröhren können in andere Materialien eingebettet werden. Beispielhaft sei hierzu auf die EP 1 275 118 B1 verwiesen. Durch die Kohlenstoffnanoröhren wird dem Material eine hohe Festigkeit verliehen. Dadurch muss die Bandage 20 bei dem erfindungsgemäßen Rotor 10 aus FIG 1 nicht ganz so dick ausgebildet sein wie sie es im Stand der Technik wäre, oder sie kann umgekehrt bei vorgegebener Dicke 20 höheren Fliehkräften standhalten, wodurch eine elektrische Maschine mit dem Rotor 10 bei höheren Drehzahlen betrieben werden kann.

Durch eine gute thermische Leitfähigkeit der Bandage wegen der Bereitstellung von Kohlenstoffnanoröhren wird verhindert, dass sich die Permantenmagneten 18 übermäßig erwärmen, so dass der Rotor 10 in einer elektrischen Maschine stabil läuft.

## Patentansprüche

1. Rotor (10) für eine elektrische Maschine, der ein Blechpaket (12) umfasst, wobei auf einer Außenoberfläche (16) des Blechpakets (12) Permanentmagnete (18) angeordnet sind, die durch ein Haltemittel (20) an dem Blechpaket (12) gehalten sind, **dadurch gekennzeichnet, dass** das Haltemittel (20) ein Nanoröhren umfassendes Material umfasst.

2. Rotor (10) nach Anspruch 1, **dadurch gekennzeichnet, dass** das Haltemittel (20) ein Kohlenstoffnanoröhren umfassendes Material umfasst.

3. Rotor (10) nach Anspruch 1 oder 2, **dadurch gekennzeichnet, dass** das Haltemittel (20) Fasern umfasst, die in eine Matrix eingebettet sind.

4. Rotor (10) nach Anspruch 3, **dadurch gekennzeichnet, dass** die Nanoröhren mit den Fasern gekoppelt sind.

5. Rotor (10) nach Anspruch 3 oder 4, **dadurch gekennzeichnet, dass** die Nanoröhren Teil des Materials sind, das die Matrix bildet.

6. Rotor (10) nach einem der Ansprüche 3 bis 5, **dadurch gekennzeichnet, dass** das Haltemittel (20) Glasfasern, Aramidfasern und/oder Kohlefasern umfasst.

7. Rotor (10) nach einem der Ansprüche 3 bis 6, **dadurch gekennzeichnet, dass** das Haltemittel (20) eine zumindest ein Epoxidharz, zumindest ein Harz aus ungesättigtem Polyester und/oder zumindest ein Phenolharz umfassende Matrix aufweist.

8. Rotor (10) nach einem der vorhergehenden Ansprüche, **dadurch gekennzeichnet, dass** das Haltemittel (20) in Form einer Hülse (20) bereitgestellt ist.

9. Rotor (10) nach einem der Ansprüche 1 bis 7, **dadurch gekennzeichnet, dass** das Haltemittel (20) in Form einer Folie, vorzugsweise einer Schrumpffolie, bereitgestellt ist.

10. Elektrische Maschine mit einem Stator sowie einem Rotor (10) nach einem der vorhergehenden Ansprüche.
